# EUROPEAN PATENT SPECIFICATION

(11) **EP 4 528 495 B1**
(45) Date of publication and mention of the grant of the patent: **15.07.2026**
(21) Application number: 22951277.7
(22) Date of filing: 26.10.2022
(51) Int. Cl.: G06F 3/0483, G06F 3/0482, G06F 3/04842, G06F 9/451, G06F 21/31, H04N 21/443, H04N 21/4782

(54) **DISPLAY DEVICE AND METHOD FOR OPERATING SAME**
ANZEIGEVORRICHTUNG UND VERFAHREN ZUM BETRIEB DAVON
DISPOSITIF D'AFFICHAGE ET PROCÉDÉ DE FONCTIONNEMENT ASSOCIÉ

(30) Priority: 13.07.2022 KR 20220086544
(43) Date of publication of application: 26.03.2025
(73) Proprietor: Samsung Electronics Co., Ltd., Suwon-si, Gyeonggi-do 16677 (KR)
(72) Inventor: LEE, Juneho, Suwon-si, Gyeonggi-do 16677 (KR); KIM, Hyunsu, Suwon-si, Gyeonggi-do 16677 (KR)
(74) Representative: Walaski, Jan Filip
(86) International application number: PCT/KR2022/016484
(87) International publication number: WO 2024/014622

(56) References cited:
- JP-A- 2000 057 065
- KR-A- 20070 117 703
- KR-A- 20140 051 645
- KR-A- 20180 051 719
- US-A1- 2010 115 451
- US-A1- 2014 013 234
- US-A1- 2021 026 913
- US-A1- 2021 152 626
- US-B1- 11 360 634
- RSONGDALSONG IT WORLD: "Explorer 11 full screen view and shortcut keys [Tips for adjusting Explorer full screen window size]", RDSONG BLOG, 25 August 2016 (2016-08-25), pages 1 - 5, XP009553310, Retrieved from the Internet <URL:https://web.archive.org/web/20160825071037/https://rdsong.com/1677>
- 삼성전자나우. 스마트한 재택근무를 위한 스마트 모니터(feat. PC 없이 RBS 접속하기). NOW News 기사. 17 November 2021, pp. 1-3, non-official translation (SAMSUNG ELECTRONICS CO., LTD. Now. Smart Monitor for Smart Telecommuting (feat. Accessing RBS Without a PC). NOW News Article.)

## Description

### Technical Field

Various embodiments relate to a display device and method for operating the same. In more detail, various embodiments relate to a display device for receiving a virtual desktop service through a web browser, and a method of operating the same.

### Background Art

A virtual desktop infrastructure (VDI) is a technology that provides an environment similar to using a personal desktop PC by allowing users to access a server that provides a virtual desktop virtual machine via a terminal. With the recent advancement of web technology, VDI services may now be provided through web browsers.

As hardware and software specifications of embedded systems have recently improved, smart monitors that provide smart functions such as web browsers have been provided. Accordingly, users may access the VDI service and receive a virtual desktop environment by using only the web browser of a smart monitor even without a PC.

US 2021/026913 A1 discloses a control feature for a web browser to assist navigating back to a previously viewed web page.

US 2010/115451 A1 discloses a browser application where a new travelogue created for a new tab is initially populated with an historical entry that points to spawning browser content information and identifies the originating tab.

### Disclosure of Invention

### Solution to Problem

According to an aspect of the invention, there is provided a display device as set out in claim 1, a method of operating a display device as set out in claim 9, and a computer-readable recording medium as set out in claim 13.

### Brief Description of Drawings

FIG. 1 is a diagram illustrating a virtual desktop system according to an embodiment.
FIGS. 2 to 4 are diagrams showing a method of receiving, by a display device, a virtual desktop service, according to an embodiment.
FIG. 5 is a diagram illustrating an example of a display device displaying a web page providing a virtual desktop service, according to an embodiment.
FIG. 6 is a flowchart showing a method by which a display device operates when a pop-up window event occurs, according to an embodiment.
FIGS. 7 and 8 are diagrams referenced to explain a method of managing, by a display device, history information in a virtual desktop infrastructure (VDI), application according to an embodiment.
FIG. 9 is a diagram showing an example of a display device displaying a web page by using a general web browser, according to an embodiment.
FIG. 10 is a block diagram illustrating a configuration of a virtualization server and a display device according to an embodiment.
FIG. 11 is a block diagram illustrating a configuration of a display device according to an embodiment.

### Mode for the Invention

The terms used in this specification will be briefly explained, and the present disclosure will be described in detail.

Although the terms used in the present disclosure are selected from generally known and used terms, terms used herein may be varied depending on operator's intention or customs in the art, appearance of new technology, or the like. In addition, some of the terms mentioned in the description of the present disclosure have been selected by the applicant at his or her discretion, the detailed meanings of which are described in relevant parts of the description herein. Therefore, the terms used in the present disclosure need to be defined based on the meaning of the terms and the overall content of the present disclosure, rather than simply the names of the terms.

Throughout the specification, when a certain portion "comprises or includes" a certain component, this indicates that the other components are not excluded and may be further included unless specially described otherwise. The terms "unit", and "module" described in the specification indicate a unit for processing at least one function or operation, which may be implemented by hardware, software or a combination thereof.

Embodiments are described in detail for those of ordinary skill in the art to easily implement with reference to the accompanying drawings. However, the present disclosure may be implemented in various different forms and is not limited to these embodiments. To clearly describe the present disclosure, a portion without concerning to the description is omitted in the drawings, and like reference numerals in the specification denote like elements.

The term "user" in embodiments of this specification means a person who controls a system, a function, or an operation, and may include a developer, an administrator, or an installer.

In the embodiments of the present specification, "image" or "picture" may represent a still image, a moving image including a plurality of consecutive still images (or frames), or a video.

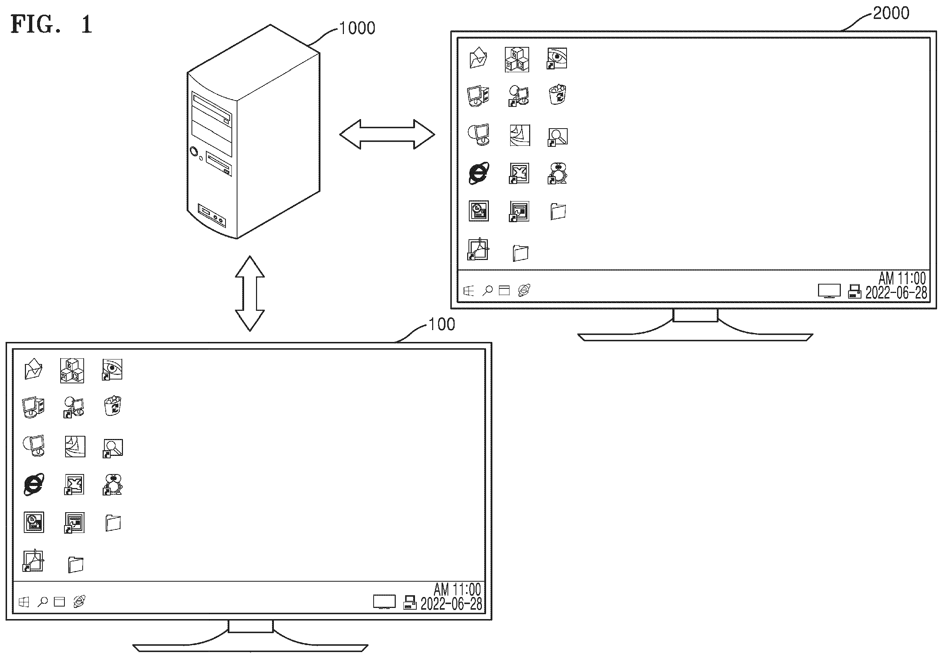

FIG. 1 is a diagram illustrating a virtual desktop system according to an embodiment.

Referring to FIG. 1, the virtual desktop system according to an embodiment may provide a virtual desktop infrastructure (VDI). The VDI may be a server computing model that enables host-based desktop virtualization and may include a software system and software required to support a virtualization environment. The VDI may include a virtual machine layer in which a virtual desktop is executed by a central server rather than a local system, a storage layer that stores virtual machine data, a session management layer that connects virtual machines, and a client layer that receives a virtualization service.

The virtual desktop system according to an embodiment may include a virtualization server 1000, a client terminal 100, and a local desktop 2000.

The virtualization server 1000 according to an embodiment may provide a virtual desktop service. The virtual desktop service may reproduce a desktop computer of a user online, and in some embodiments, may virtualize a work desktop of the user to provide a work environment online. In this case, an internal business system of a company may be connected to the virtualization server 1000 or the internal business system itself may be virtualized within the virtualization server 1000. By doing so, the virtualization server 1000 may provide, to a user, a virtual work environment in which the user may access the internal business system and perform work. However, the virtualization server 1000 is not limited thereto.

The virtualization server 1000 according to an embodiment may provide different virtual desktop services for respective users and may provide independent storage space or the like for each user. Here, applications or data saved by separate users through the virtual desktop service may be distributed and stored in a storage or the like. Through the virtual desktop service, a user may freely access his or her own work environment regardless of time and place.

The virtualization server 1000 according to an embodiment may include a web server. The virtualization server 1000 may provide a web page that provides the virtualization service via the Internet.

The client terminal 100 according to an embodiment may be a device belonging to a client layer physically used by a user and may access the virtualization server 1000 through a communication network. The client terminal 100 may transmit and receive data with the virtualization server 1000 through the communication network.

The client terminal 100 may receive the virtual desktop service from the virtualization server 1000. For example, the client terminal 100 may use a virtual desktop (virtual machine) driven in the virtualization server 1000.

The client terminal 100 according to an embodiment may include a web browser and may receive a web page providing the virtual desktop service from the virtualization server through the web browser.

The client terminal 100 according to an embodiment may be a display device including a display. For example, the client terminal 100 may be implemented in various forms such as a television (TV), a smart monitor, a mobile phone, a tablet personal computer (tablet PC), a digital camera, a camcorder, a laptop computer, a desktop, an e-book terminal, a digital broadcasting terminal, personal digital assistants (PDA), a portable multimedia player (PMP), a navigation device, an MP3 player, or a wearable device. The client terminal 100 may be a fixed electronic device placed in a fixed location or a mobile electronic device having a portable form and may be a digital broadcast receiver for receiving digital broadcasts. However, the client terminal 100 is not limited thereto.

The local desktop 2000 according to an embodiment may be a terminal located in a fixed work environment such as an office and may be a terminal that serves as a mother terminal of a virtual desktop. The local desktop 2000 is not limited to a desktop and may include various terminals. The local desktop 2000 may have a configuration similar to that of the client terminal 100 and may communicate with the virtualization server 1000. The virtualization server 1000 may receive information about the current state of the local desktop 2000 from the local desktop 2000 and generate virtual desktop information based on the received information. When receiving virtualization request information from the client terminal 100, the virtualization server 1000 may transmit the generated virtual desktop information to the client terminal 100.

For example, the local desktop 2000 may be a terminal operated by the user in an existing work environment. The client terminal 100 may request the virtualization server 1000 to generate a virtual desktop when the user has difficulty in directly accessing the local desktop 2000 due to movement or going out. The virtualization server 1000 may generate virtual desktop information based on the state information of the local desktop 2000 and provide the generated virtual desktop information to the client terminal 100.

Hereinafter, for convenience of explanation, the client terminal 100 according to an embodiment will be referred to as a display device. The display device 100 according to an embodiment may receive a virtual desktop service through a web browser.

Hereinafter, a method of receiving a virtual desktop service through a web browser by the display device 100 according to an embodiment will be described in detail with reference to the drawings.

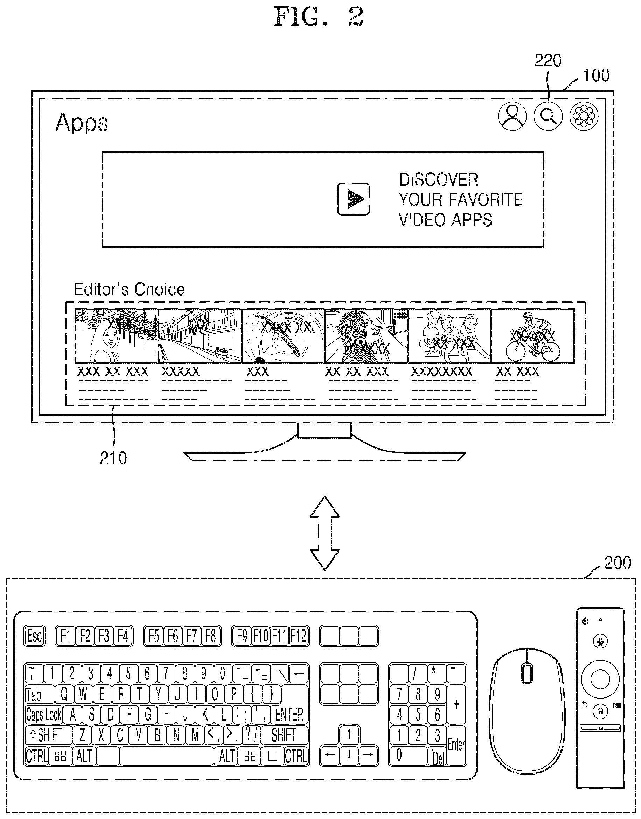

FIGS. 2 to 4 are diagrams showing a method of receiving, by a display device, a virtual desktop service, according to an embodiment.

Referring to FIG. 2, the display device 100 according to an embodiment may receive a control signal or a control command corresponding to a user input (e.g., a key or button input of a control device 200) from the control device 200. The control device 200 may include a remote control, a keyboard, and a mouse and may transmit and receive data, information, signals, or the like with the display device 100 through wired or wireless communication. However, the control device 200 is not limited thereto.

The display device 100 may receive a control signal or control command from the control device 200 and perform an operation corresponding to a user input.

For example, the display device 100 according to an embodiment may install an application and execute the installed application based on the user input.

The display device 100 may display an application list when an application menu is executed based on the user input. The application list 210 may include items representing applications installed in the display device 100.

The display device 100 may download and install an application that provides a virtual desktop service (hereinafter referred to as a VDI application). The display device 100 may download and install a VDI application by accessing an application market such as the App store or an Internet site. Alternatively, the VDI application may be an application installed by default in the display device 100.

According to an embodiment, the display device 100 may use a search function to search for an application to be executed. For example, a search icon 220 provided in the application menu may be selected to search for the application to be executed.

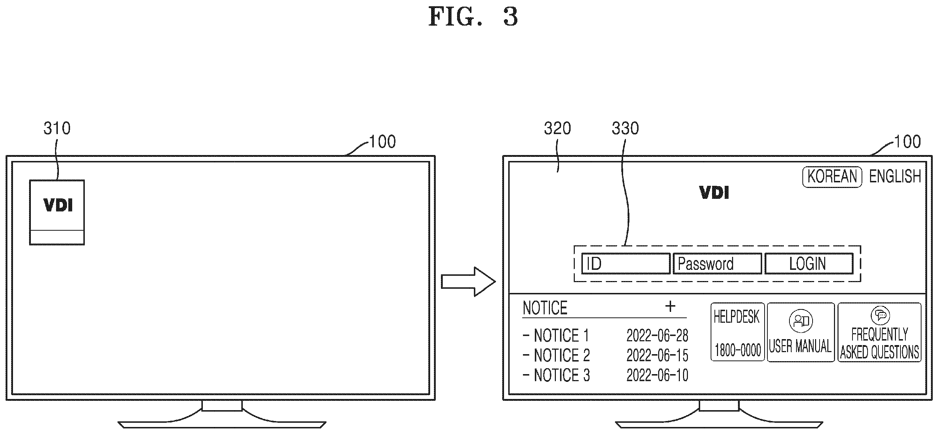

When searching for a VDI application by using the search icon 220, the display device 100 may display an item 310 corresponding to the VDI application on a screen as a search result, as shown in FIG. 3. The display device 100 may execute the searched VDI application. When the VDI application is executed, the display device 100 may display an application execution screen 320.

The VDI application according to an embodiment may be an application that performs a web browser function. For example, the VDI application may provide the virtual desktop service through a web browser and provide web pages that provide the virtual desktop service.

For example, as shown in FIG. 3, when the VDI application is executed, the display device 100 may display a web page providing the virtual desktop service. The web page providing the virtual desktop service may include a menu 330 for inputting login information.

The display device 100 may transmit login information received from a user to the virtualization server 1000, and the virtualization server 1000 may perform user authentication based on the received login information. In this case, the login information may include various information such as identification (ID) and password, biometric information, social network service (SNS) login information, and terminal identification information.

The virtualization server 1000 may generate virtual desktop information based on local desktop information corresponding to the display device 100 when user authentication is completed based on the received login information. The virtualization server 1000 may provide the generated virtual desktop information to the display device 100. In this case, the virtualization server 1000 may provide virtual desktop information as a web page screen.

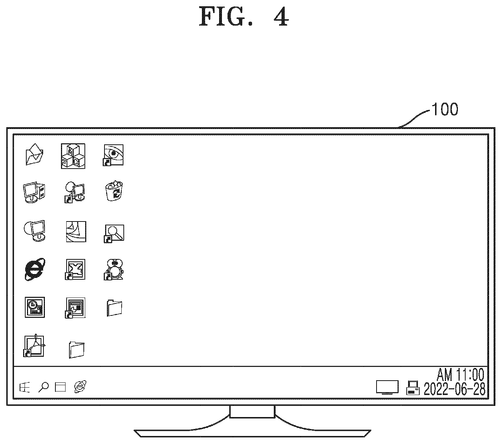

As shown in FIG. 4, the display device 100 according to an embodiment may display the virtual desktop information. In this case, the virtual desktop information displayed on the display device 100 may be the same as the local desktop information and may be displayed as a full screen. For example, the display device 100 may display a wallpaper of a local desktop as a full screen. However, the display device 100 is not limited thereto.

The display device 100 may display an execution screen of the VDI application as a full screen, and thus even if the virtual desktop service is provided through a web browser, the user may have an experience similar to that of accessing a remote terminal.

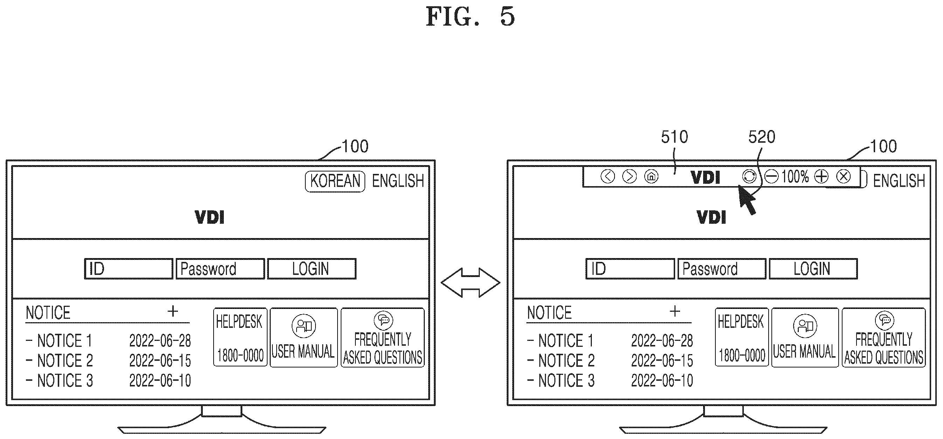

FIG. 5 is a diagram illustrating an example of a display device displaying a web page providing a virtual desktop service, according to an embodiment.

Referring to FIG. 5, the display device 100 according to an embodiment may generate a first window and display a first web page providing the virtual desktop service in the first window when the VDI application is executed. In this case, the first window may be displayed as a full screen. The first web page may be a home page providing the virtual desktop service. The first web page may include various menus, such as a menu for entering login information and a notice.

The display device 100 according to an embodiment may display a web browser menu 510 including a menu corresponding to at least one web browser function in a first area of the first window.

The web browser menu 510 may include menu items corresponding to moving to a previous page (or going back), moving to a next page (or going forward), moving to a home page, refreshing, and exiting an application.

The display device 100 may hide the web browser menu 510 when the web browser menu 510 is not used. For example, the display device 100 may control the web browser menu 510 to be displayed when a cursor 520 is positioned in an area (first area) in which the web browser menu is hidden without displaying the web browser menu 510 on the screen. The display device 100 may display the web browser menu 510 and hide the web browser menu 510 when the cursor 520 is moved to another area or there is no input for a preset period of time. However, the display device 100 is not limited thereto and may display the web browser menu 510 in various ways.

The web browser menu 510 when the display device 100 is not in use may be hidden, and thus even if the virtual desktop service is provided through a web browser, the user may have an experience similar to that of accessing a remote terminal.

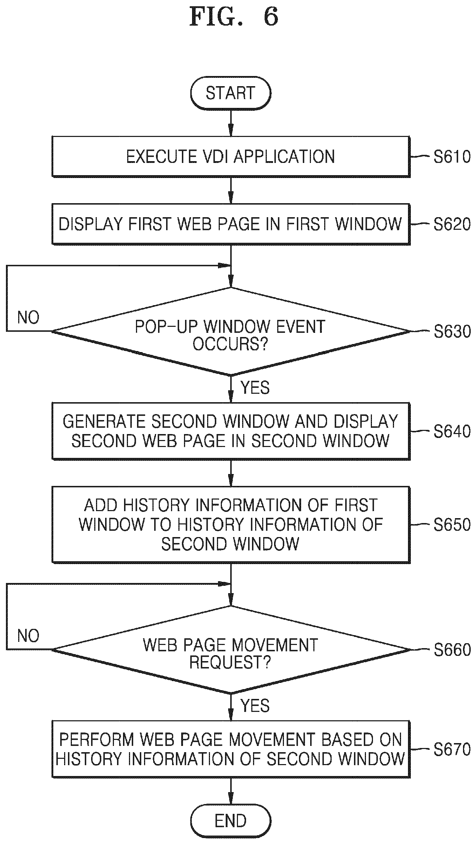

FIG. 6 is a flowchart showing a method by which a display device operates when a pop-up window event occurs, according to an embodiment.

Referring to FIG. 6, the display device 100 according to an embodiment may execute a VDI application (S610).

The VDI application according to an embodiment may be an application that performs a web browser function. For example, the VDI application may provide a virtual desktop service through a web browser and provide a web page that provides the virtual desktop service.

The display device 100 according to an embodiment may download and install the VDI application and execute the installed VDI application.

According to an embodiment, when the VDI application is executed, the display device 100 may generate a first window and display a first web page in the first window (S620).

For example, the display device 100 may display the first window as a full screen. The first web page may be a home page providing the virtual desktop service. The first web page may include various menus, such as a menu for inputting login information and a notice.

According to an embodiment, when a pop-up window event occurs in the first web page (S630), the display device 100 may generate a second window and display a second web page in the second window (S640).

Here, the pop-up window event may include a request or input that causes a new window to be generated that is different from an existing window (e.g., the first window). For example, some of the items provided in the first web page may be set such that when a corresponding item is selected, a page corresponding to the item is displayed in a new window different from the first window rather than in the first window. The pop-up window event may include an input that selects some of the items provided in the first web page.

When some of the items provided in the first web page are selected, the display device 100 may generate a second window and display a web page corresponding to the selected items in the generated second window. For example, when a view-more item of a notice menu provided in the first web page is selected, the display device 100 may generate the second window and display a notice list page in the second window. However, the display device 100 is not limited thereto.

The display device 100 according to an embodiment may add or copy history information of the first window to history information of the second window (S650).

According to an embodiment, when the second window is generated, the display device 100 may include information about a web page provided in the history information of the first window in the history information of the second window. For example, when the history information of the first window includes information about the first web page, and the second window is generated and the second web page is displayed while the first web page is displayed in the first window, the display device 100 may include information about the first web page and the second web page in the history information of the second window.

According to an embodiment, when a request to move to a web page is input in the second window (S660), the display device 100 may perform web page movement based on the history information of the second window (S670).

For example, the display device 100 according to an embodiment may recognize a previous page of the second web page as the first web page based on the history information of the second window, to which the history information of the first window has been added. Accordingly, when a request to move to a previous page is input while a second web page is displayed in the second window, the display device 100 may display the first web page in the second window.

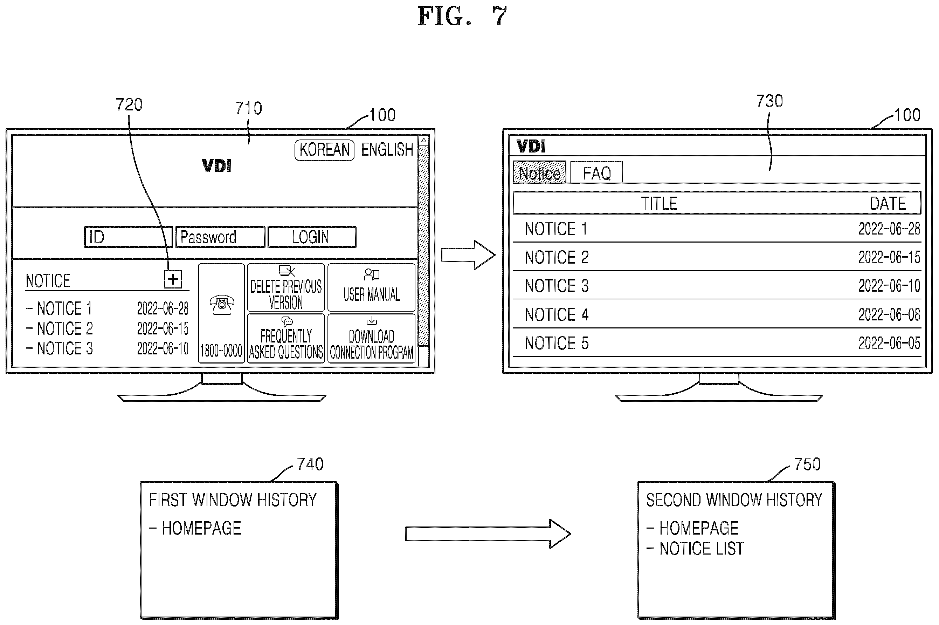

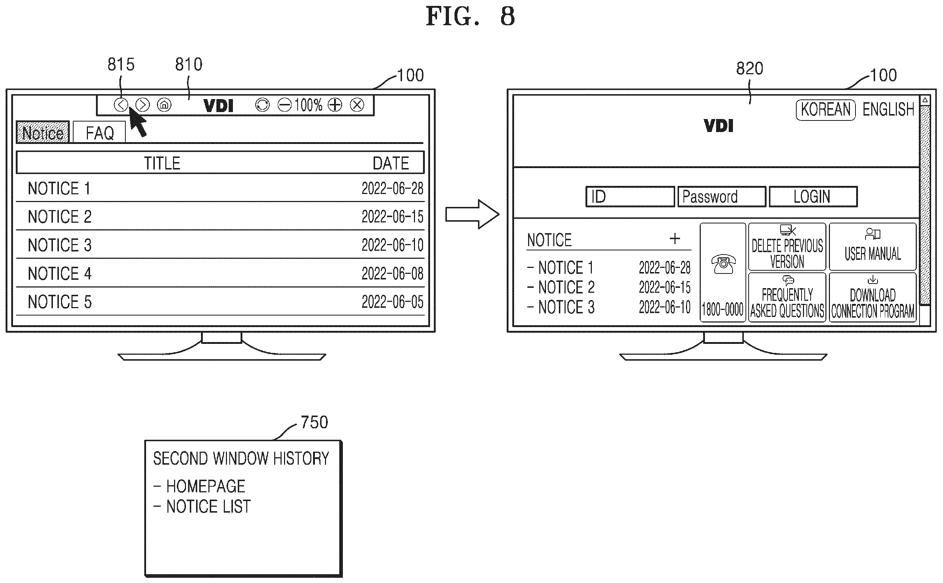

FIGS. 7 and 8 are diagrams referenced to explain a method of managing, by a display device, history information in a VDI, application according to an embodiment.

Referring to FIG. 7, the display device 100 according to an embodiment may display a home page (hereinafter, referred to as a first web page) providing a virtual desktop service when a VDI application is executed based on a user input. For example, the display device 100 may generate a first window 710 and display a first web page in the first window 710. In this case, the first window 710 may be displayed as a full screen.

The first web page according to an embodiment may include a menu for inputting login information of a home page providing the virtual desktop service. The first web page may include various menus such as notices. The display device 100 may receive a control signal corresponding to an input for selecting a menu item provided in a home page from the control device 200.

The display device 100 may execute a function corresponding to a selected menu item based on the received control signal. For example, when a view-more item 720 provided in the notice menu is selected, the display device 100 may display a notice list page. In this case, the notice list page may be a pop-up page and may be displayed in a different window from the window in which the first web page is displayed.

For example, the display device 100 may generate a second window 730 based on reception of a control signal for selecting the view-more item 720 provided in the first web page. The display device 100 may display the notice list page in the second window 730. In this case, the second window 730 may be displayed as a full screen.

The display device 100 may add or copy history information 740 of the first window to history information 750 of the second window.

For example, the history information 740 of the first window may include a first web page (e.g., a home page). When a pop-up window event occurs in the first web page, the second window 730 is generated, and the second web page (e.g., a notice list page) is displayed in the second window 730, the display device 100 may add or copy the first web page information provided in the history information 740 of the first window to the history information 750 of the second window. Accordingly, the history information 750 of the second window may include first web page and second web page information.

The display device 100 may remove the first window 710 from the screen after the second window 730 is generated and the history information 740 of the first window is added or copied to the history information 750 of the second window.

Referring to FIG. 8, the display device 100 according to an embodiment may display a hidden web browser menu 810. For example, when a cursor is moved to an area on the screen, in which the web browser menu 810 is hidden, the web browser menu 810 may be displayed.

The web browser menu 810 may include menu items corresponding to at least one web browser function. For example, the web browser menu 810 may include menu items corresponding to moving to a previous page (or going back), moving to a next page (or going forward), moving to a home page, refreshing, and exiting an application. In this case, a menu item 815 corresponding to moving to the previous page may be activated.

When a request to move to a previous page is input, the display device 100 may control display of the previous page based on the history information 750 of the second window.

For example, when an input for selecting the menu item 815 corresponding to moving to the previous page is received by moving the cursor, the display device 100 may control display of the previous page. However, the request to move to the previous page may include, but is not limited to, a control signal generated based on inputting various buttons, keys, and the like provided in the control device 200.

For example, the control device 200 may include a back button (or key), and a cancel button (or key) and a control signal generated by input of the corresponding button (or key) may be transmitted to the display device 100.

The display device 100 may receive voice input, gesture input, motion input, and the like corresponding to moving to the previous page.

The display device 100 according to an embodiment may control display of the previous page based on the received control signal.

The display device 100 according to an embodiment may recognize a previous page of the second web page as the first web page based on the history information 750 of the second window. In detail, although the second web page is first displayed in the second window 730, the display device 100 may recognize the first web page that is last displayed in the first window 710, which is a window before the second window is generated, as the previous page of the second web page by adding or copying the history information of the first window 710 to the history information of the second window.

Accordingly, the display device 100 may display, in the second window 730, a first web page 820 displayed in the first window 710 based on the request to move to the previous page, as shown in FIG. 8.

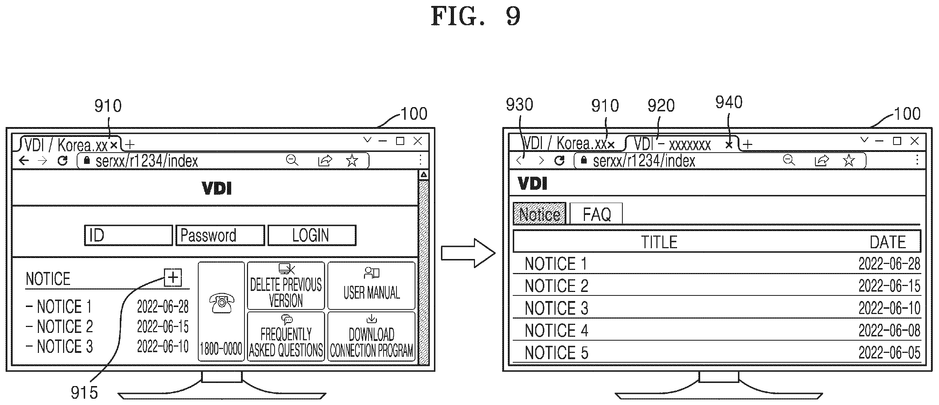

FIG. 9 is a diagram showing an example of a display device displaying a web page by using a general web browser, according to an embodiment.

Referring to FIG. 9, the display device 100 according to an embodiment may execute an application (web browser application) that performs a general web browser function. For example, the web browser application may include, but is not limited to, Internet Explorer, Edge, Chrome, and Safari. Here, the web browser application is a different application from a VDI application according to an embodiment.

The display device 100 may access a web server providing a virtual desktop service by using a web browser application. When accessing the web server, the display device 100 may display a homepage (first web page) providing the virtual desktop service in a first tab 910.

When receiving an input for selecting a view-more item 915 provided in a homepage, the display device 100 may generate a new tab and display a notice list page in the new tab. For example, the first web page may be displayed in the first tab 910, and the notice list page (second web page) may be displayed in a second tab 920. In this case, the first tab 910 may not be deleted from a screen, but is covered by a screen of the second tab 920 and may be deactivated.

In this case, history information is managed for each tab, and in the case of the second tab 920, the notice list page is displayed first, and thus there is no information about a previous page.

Accordingly, movement to the previous page may not be performed in the second tab 920, and a previous page movement menu 930 may not be activated.

The display device 100 may remove the second tab 920 from the screen based on the input for selecting a close item 940 displayed in the second tab 920. The display device 100 may display the first tab 910 hidden by the second tab 920 on the screen again based on the input for selecting the first tab 910. In this case, the second tab 920 may be hidden by the screen of the first tab 910 and deactivated.

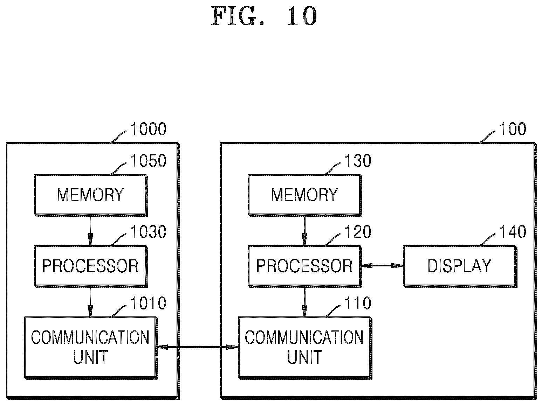

FIG. 10 is a block diagram illustrating a configuration of a virtualization server and a display device according to an embodiment.

Referring to FIG. 10, the virtualization server 1000 according to an embodiment may generate virtual desktop information based on local desktop information corresponding to a request from the display device 100, which is a client terminal, and provide the generated virtual desktop information to the display device 100.

The virtualization server 1000 according to an embodiment may include a communication unit 1010, a processor 1030, and memory 1050. The communication unit 1010 may communicate with the display device 100 and the local desktop 2000. For example, the communication unit 1010 may transmit and receive information generated in the display device 100 and the local desktop 2000 and information generated in the virtualization server 1000. The communication unit 1010 may receive a virtualization request from the display device 100. The virtualization request may be a request for generation and provision of the virtual desktop information. For example, the communication unit 1010 may receive user authentication information (e.g., login information) from the display device 100.

According to an embodiment, the memory 1050 may store various data, programs, or applications for driving and controlling the virtualization server 1000.

A program stored in the memory 1050 may include one or more instructions. The program (one or more instructions) or application stored in the memory 1050 may be executed by the processor 1030.

According to an embodiment, when receiving the virtualization request from the display device 100, the processor 1030 may generate the virtual desktop information based on information about the local desktop 2000 corresponding to the display device 100. The processor 1030 may provide the virtual desktop information to the display device 100.

The display device 100 according to an embodiment may include a communication unit 110, a processor 120, memory 130, and a display 140.

The communication unit 110 according to an embodiment may transmit and receive data or a signal with an external device or a server. For example, the communication unit 110 may include a Wi-Fi module, a Bluetooth module, an infrared communication module, a wireless communication module, a LAN module, an Ethernet module, and a wired communication module. In this case, each communication module may be implemented in the form of at least one hardware chip.

The Wi-Fi module and the Bluetooth module perform communication via Wi-Fi and Bluetooth, respectively. When the Wi-Fi module or the Bluetooth module is used, various connection information such as service set identifier (SSID) and a session key may be first transmitted and received, communication may be established by using the information, and then various information may be transmitted and received. The wireless communication module may include at least one communication chip that performs communication according to various wireless communication standards, such as zigbee, 3rd Generation (3G), 3rd Generation Partnership Project (3GPP), Long Term Evolution (LTE), LTE Advanced (LTE-A), 4th Generation (4G), or 5th Generation (5G).

According to an embodiment, when a VDI application is executed, the communication unit 110 may access the virtualization server 1000 and receive web page information that provides the virtual desktop service.

According to an embodiment, the communication unit 110 may receive a control signal or a control command from an external control device 200. For example, the communication unit 110 may include an infrared (IR) module for transmitting and receiving a signal with an external control device according to the IR communication standard. In detail, the communication unit 110 may receive the control signal or control command corresponding to a user input (e.g., input of a key or button of the control device) from the control device.

The processor 120 according to an embodiment controls the overall operation of the display device 100 and a signal flow between internal components of the display device 100, and performs a function of processing data.

The processor 120 may include single core, dual core, triple core, quad core, and multiples thereof. The processor 120 may include a plurality of processors. For example, the processor 120 may be implemented as a main processor (not shown) and a sub processor (not shown) operating in a sleep mode.

The processor 120 may include at least one of a central processing unit (CPU), a graphic processing unit (GPU), and a video processing unit (VPU). Alternatively, in some embodiments, the processor 120 may be implemented in the form of a system on chip (SoC) obtained by integrating at least one of the CPU, the GPU, and the VPU. Alternatively, the processor 120 may further include a Neural Processing Unit (NPU).

According to an embodiment, the memory 130 may store various data, programs, or applications for driving and controlling the display device 100.

A program stored in the memory 130 may include one or more instructions. The program (one or more instructions) or application stored in the memory 130 may be executed by the processor 120.

The processor 120 according to an embodiment may install a VDI application and execute the installed VDI application based on a user input. When the VDI application is executed, the processor 120 may receive web page information providing the virtual desktop service from the virtualization server 1000 and display a web page screen. The web page screen according to an embodiment may include a menu for inputting user authentication information (login information). The processor 120 may request user authentication by transmitting the input login information to the virtualization server 1000 based on the user input when the login information is input.

When user authentication is completed, the processor 120 may receive the virtual desktop information corresponding to the local desktop information from the virtualization server 1000 and provide the received virtual desktop information. For example, the processor 120 may display the virtual desktop information as the web page screen.

A VDI application according to an embodiment may provide a web browser function, and the processor 120 may display a menu corresponding to the web browser function in an area of a window. The processor 120 may hide the web browser menu when the web browser menu is not used for a certain period of time.

The processor 120 according to an embodiment may generate a first window and display a homepage (first web page) providing the virtual desktop service in the first window when the VDI application is executed.

When a pop-up window event occurs on the first web page, the processor 120 may generate a second window and display the second web page in the second window. Here, the pop-up window event may include a request or input that causes a new window to be generated that is different from an existing window (e.g., the first window).

According to an embodiment, the processor 120 may add or copy the history information of the first window to the history information of the second window when the second window is generated. For example, when the second window is generated, the processor 120 may include information about a web page provided in the history information of the first window in the history information of the second window. For example, when the history information of the first window includes information about the first web page, and the second window is generated and the second web page is displayed while the first web page is displayed in the first window, the processor 120 may include information about the first web page and the second web page in the history information of the second window.

When a request for web page movement is input in the second window, the processor 120 may perform web page movement based on the history information of the second window. For example, the processor 120 may recognize a previous page of the second web page as the first web page based on the history information of the second window. Accordingly, when a request to move to a previous page is input while a second web page is displayed in the second window, the processor 120 may display the first web page in the second window.

According to an embodiment, the display 140 generate a driving signal by converting an image signal, a data signal, an OSD signal, a control signal, and the like, which are processed by the processor 120. The display 140 may be implemented as a plasma display panel (PDP), a liquid crystal display (LCD), an organic light-emitting diode (OLED), a flexible display, or the like and may also be implemented as a 3D display. The display 140 may be configured as a touch screen and may be used as an input device in addition to an output device.

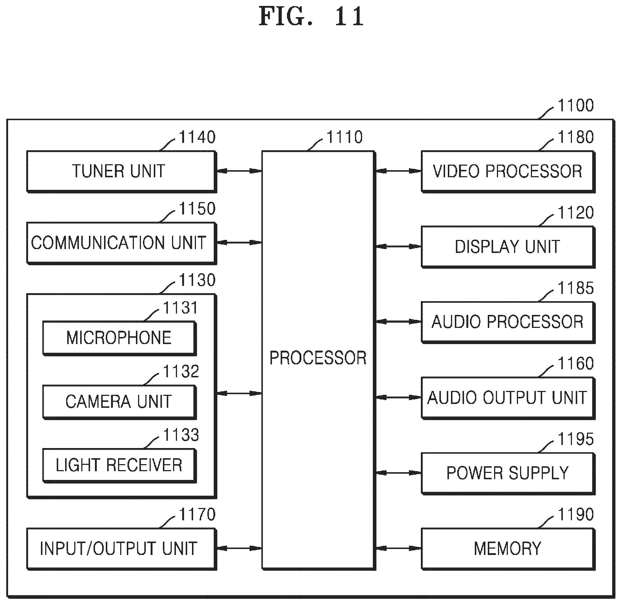

FIG. 11 is a block diagram illustrating a configuration of a display device according to an embodiment.

Referring to FIG. 11, a display device 1100 of FIG. 11 may be an embodiment of the display device 100 described with reference to FIGS. 1 to 10.

Referring to FIG. 11, the display device 1100 according to an embodiment may include a tuner unit 1140, a processor 1110, a display unit 1120, a communication unit 1150, a detector 1130, an input/output unit 1170, a video processor 1180, an audio processor 1185, an audio output unit 1160, memory 1190, and a power supply 1195.

The communication unit 1150 of FIG. 11 is a component corresponding to the communication unit 110 of FIG. 10, the processor 1110 of FIG. 11 is a component corresponding to the processor 120 of FIG. 10, the memory 1190 of FIG. 11 is a component corresponding to the memory 130 of FIG. 10, and the display unit 1120 of FIG. 11 is a component corresponding to the display 140 of FIG. 10. Therefore, the same content as explained above will be omitted.

The tuner unit 1140 according to an embodiment may select only a frequency of a channel to be received by the display device 1100 from among many radio wave components via amplification, mixing, resonance, or the like of a broadcast signal received wired or wirelessly. The broadcast signal includes audio, video, and additional information (e.g., electronic program guide (EPG)).

The tuner unit 1140 may receive the broadcast signal from various sources such as terrestrial broadcasting, cable broadcasting, satellite broadcasting, and Internet broadcasting. The tuner unit 1140 may also receive the broadcast signal from a source such as analog broadcasting or digital broadcasting.

The detector 1130 may detect a user voice, a user image, or a user interaction and may include a microphone 1131, a camera unit 1132, and a light receiver 1133.

The microphone 1131 receives uttered voice of the user. The microphone 1131 may convert the received voice into an electrical signal and output the electrical signal to the processor 1110. The user voice may include, for example, a voice corresponding to a menu or function of the display device 1100.

The camera unit 1132 may receive an image (e.g., consecutive frames) corresponding to a user motion including a gesture within a camera recognition range. The processor 1110 may select a menu displayed on the display device 1100 or perform control corresponding to the motion recognition result by using the recognition result of the received motion.

The light receiver 1133 receives a light signal (including a control signal) received from an external control device through a light window (not shown) of a bezel of the display unit 1120. The light receiver 1133 may receive a light signal corresponding to a user input (e.g., touch, press, touch gesture, voice, or motion) from the control device. A control signal may be extracted from the received light signal under control of a processor 1310.

The input/output unit 1170 receives video (e.g., moving image), audio (e.g., voice or music), and additional information (e.g., EPG) from outside the display device 1100. An input/output interface may include any one of high-definition multimedia interface (HDMI), mobile high-definition link (MHL), universal serial bus (USB), display port (DP), thunderbolt, video graphics array (VGA) port, RGB port, D-subminiature (D-SUB), digital visual interface (DVI), component jack, and PC port.

The processor 1110 controls the overall operation of the display device 1100 and a signal flow between internal components of the display device 1100, and performs a function of processing data. The processor 1110 may execute an operating system (OS) and various applications stored in the memory 1190 when there is a user input or when a preset and stored condition is satisfied.

The processor 1110 may include random access memory (RAM) that stores a signal or data input from the outside of the display device 1100 or is used as a storage area corresponding to various tasks performed in the display device 1100, read only memory (ROM) that stores a control program for controlling the display device 1100, and a processor.

The video processor 1180 performs processing on video data received by the display device 1100. The video processor 1180 may perform various image processing such as decoding, scaling, noise filtering, frame rate conversion, and resolution conversion on video data.

The audio processor 1185 performs processing on audio data. In the audio processor 1185, various processing such as decoding, amplification, and noise filtering of the audio data may be performed. The audio processor 1185 may include a plurality of audio processing modules to process audio corresponding to a plurality of contents.

The audio output unit 1160 outputs audio provided in a broadcast signal received through the tuner unit 1140 under control of the processor 1110. The audio output unit 1160 may output audio (e.g., voice or sound) input through the communication unit 1150 or the input/output unit 1170. The audio output unit 1160 may output audio stored in the memory 1190 under control of the processor 1110. The audio output unit 1160 may include at least one of a speaker, a headphone output terminal, or a Sony/Philips digital interface (S/PDIF) output terminal.

The power supply 1195 supplies power input from an external power source to components inside the display device 1100 under control of the processor 1110. The power supply 1195 may supply power output from one or more batteries (not shown) located inside the display device 1100 to internal components under control of the processor 1110.

The memory 1190 may store various data, programs or applications for driving and controlling the display device 1100 under control of the processor 1110. The memory 1190 may include a broadcast receiving module, a channel control module, a volume control module, a communication control module, a voice recognition module, a motion recognition module, an optical receiving module, a display control module, an audio control module, an external input control module, a power control module, a power control module of an external device connected wirelessly (e.g., Bluetooth), a voice database (DB), or a motion DB, which is not shown. The modules and database of memory 1390 which are not shown may be implemented in software form to perform a control function of broadcast reception, a channel control function, a volume control function, a communication control function, a voice recognition function, a motion recognition function, an optical reception control function, a display control function, an audio control function, an external input control function, a power control function, or a power control function of an external device connected wirelessly (e.g., Bluetooth) by the display device 1100. The processor 1110 may perform each function by using software stored in the memory 1190.

The block diagrams of the display devices 100 and 1100 illustrated in FIGS. 10 and 11 are each a block diagram for an embodiment. Each component of the block diagrams may be integrated, added, or omitted depending on the specifications of the display devices 100 and 1100 to be actually implemented. That is, two or more components may be combined into one component, or one component may be divided into two or more components, as needed. The functions performed in respective blocks are to explain embodiments, and specific operations or devices thereof do not limit the scope of the present disclosure.

A display device according to an embodiment may include a display, memory storing one or more instructions, and at least one processor configured to execute the one or more instructions.

The at least one processor may be configured to execute the one or more instructions to control the display to display the first web page in the first window based on execution of a predetermined application.

The at least one processor may be configured to execute the one or more instructions to control the display to display the second web page in the second window and add the history information of the first window to the history information of the second window based on occurrence of a pop-up window event in the first web page.

The at least one processor may be configured to execute the one or more instructions to perform web page movement based on the history information of the second window based on reception of an input for a web page movement request in the second window.

The at least one processor may be configured to execute the one or more instructions to receive an input for a movement request to a previous page while the second web page is displayed in the second window. The at least one processor may be configured to control the display to display the first web page in the second window based on reception of the input for the movement request to the previous page.

The display device according to an embodiment may operate to move to the previous page displayed in the first window even within the second window by adding the history information of the first window to the history information of the second window.

The at least one processor may be configured to execute the one or more instructions to remove the first window from the screen based on occurrence of the pop-up window event in the first window.

The at least one processor may be configured to execute the one or more instructions to control the display to display the first window and the second window as a full screen.

The at least one processor may be configured to execute the one or more instructions to control the display to display a web browser menu providing at least one web browser function in at least one of the first window and the second window, based on reception of a user input.

The at least one processor may be configured to execute the one or more instructions to control the display to hide the web browser menu and prevent the web browser menu from being displayed based on the user input not being received for a preset period of time.

The display device according to an embodiment may provide a user with an experience similar to being connected to a remote terminal even though a virtual desktop service is provided through a web browser by hiding the web browser menu and displaying the web page as a full screen.

The display device according to an embodiment may include a communication unit that performs communication with an external control device that controls the display device. The input for the web page movement request may include an input of a specific key provided in the external control device.

The first web page may include a homepage providing a virtual desktop infrastructure (VDI) service.

The first web page may include a menu for inputting login information.

The display device according to an embodiment may include a communication unit that performs communication with an external server. The processor may be configured to execute the one or more instructions to request user authentication from an external server based on the login information.

The processor may be configured to execute the one or more instructions to control the communication unit to receive virtual desktop information from the external server based on completion of user authentication by the external server.

The processor may be configured to execute the one or more instructions to control the display to display the virtual desktop information.

A method of operating a display device according to an embodiment may include displaying a first web page in a first window based on execution of a predetermined application.

The method of operating a display device according to an embodiment may include displaying a second web page in a second window based on occurrence of a pop-up window event in the first web page.

The method of operating a display device according to an embodiment may include adding the history information of the first window to the history information of the second window.

The method of operating a display device according to an embodiment may include performing web page movement based on the history information of the second window based on reception of the input for the web page movement request in the second window.

The method of operating a display device according to an embodiment may include displaying the first web page in the second window based on reception of the input for the movement request to the previous page while the second web page is displayed in the second window.

The method of operating a display device according to an embodiment may include removing the first window from a screen based on occurrence of a pop-up window event in the first window.

The first window and the second window may be displayed as a full screen.

The method of operating a display device according to an embodiment may further include displaying a web browser menu providing at least one web browser function in at least one of the first window and the second window based on reception of a user input.

The method of operating a display device according to an embodiment may include controlling the web browser menu to be hidden not to be displayed on the display based on the user input not being received for a preset period of time.

The method of operating a display device according to an embodiment may include receiving an input of a specific key provided in an external control device that controls the display device.

The method of operating a display device according to an embodiment may include performing web page movement based on the history information of the second window, based on reception of the input of the specific key.

The first web page may include a homepage providing a virtual desktop infrastructure (VDI) service.

The first web page may include a menu for inputting login information.

The method of operating a display device according to an embodiment may include requesting user authentication from an external server based on the login information.

The method of operating a display device according to an embodiment may include receiving virtual desktop information from an external server based on completion of user authentication by the external server.

The method of operating a display device according to an embodiment may include displaying the virtual desktop information.

The method of operating a display device according to an embodiment may be implemented in the form of a program command to be executed through various computer devices and recorded on a computer-readable medium. The computer-readable medium may include a program command, a data file, and a data structure alone or in combination. The program command recorded in the medium may be specially designed and configured for the present disclosure or be known to those of skill in the field of computer software. Examples of a computer readable recording medium include magnetic media such as hard disks, floppy disks and magnetic tapes, optical media such as CD-ROMs and DVDs, magneto-optical media such as floptical disks, or hardware devices such as ROMs, RAMs and flash memories, which are specially configured to store and execute program commands. Examples of the program commands include a machine language code created by a compiler and a high-level language code executable by a computer using an interpreter and the like.

The method of operating a display device according to the embodiment may be provided as provided in a computer program product. The computer program product may be traded between a seller and a buyer as commodities.

The computer program product may include a S/W program and a computer-readable storage medium having the S/W program stored thereon. For example, the computer program product may include a product in the form of a S/W program (e.g., a downloadable app) distributed electronically by a manufacturer of an electronic device or through an electronic marketplace (e.g., Google Play Store or App Store). For electronic distribution, at least a portion of the S/W program may be stored on a storage medium or temporarily generated. In this case, the storage medium may be a storage medium of a manufacturer server, an electronic market server, or a relay server that temporarily stores a SW program.

The computer program product, in a system including a server and a client device, may include a storage medium of the server or a storage medium of the client device. Alternatively, when there is a third device (e.g., a smartphone) that is connected to communicate with the server or the client device, the computer program product may include a storage medium of the third device. Alternatively, the computer program product may include a S/W program itself that is transmitted from the server to the client device or the third device, or from the third device to the client device.

In this case, one of the server, the client device and the third device may perform the computer program product to perform the method according to the disclosed embodiments. Alternatively, two or more of the server, the client device and the third device may execute the computer program product to implement the method according to the disclosed embodiments in a distributed manner.

For example, a server (e.g., a cloud server or an artificial intelligence server) may execute a computer program product stored on the server to control the client device in communication with the server to perform a method according to the disclosed embodiments.

Although the embodiments have been described in detail above, the scope of the present disclosure is not limited thereto, and various modifications and improvements made by those skilled in the art by using the basic concept of the present disclosure defined in the following claims also fall within the scope of the present disclosure.

## Claims

1. A display device (100) comprising:
a display (140);
memory (130) storing one or more instructions; and
at least one processor (120) configured to execute the one or more instructions to, based on execution of a predetermined application, control the display (140) to display a first web page in a first window,
based on occurrence of a pop-up window event in the first web page, control the display (140) to display a second web page in a second window, and add history information of the first window including information about the first web page to history information of the second window, wherein the history information of the second window includes information about the first web page and information about the second web page, and
based on reception of an input for a web page movement request to a previous page while the second web page is displayed in the second window, control the display to display the first web page in the second window based on the history information of the second window.

2. The display device of claim 1, wherein the at least one processor is configured to execute the one or more instructions to, based on occurrence of a pop-up window event in the first window, remove the first window from a screen.

3. The display device of claim 1, wherein the at least one processor is configured to execute the one or more instructions to control the display to display the first window and the second window as a full screen.

4. The display device of claim 1, wherein the at least one processor is configured to execute the one or more instructions to, based on reception of a user input, control the display to display a web browser menu providing at least one web browser function in at least one of the first window and the second window.

5. The display device of claim 4, wherein the at least one processor is configured to execute the one or more instructions to, based on the user input not being received for a preset period of time, control the display to hide the web browser menu and prevent the web browser menu from being displayed.

6. The display device of claim 1, further comprising a communication unit (110) configured to perform communication with an external control device (200) controlling the display device, wherein the input for the web page movement request includes an input of a specific key provided in the external control device.

7. The display device of claim 1, wherein the first web page includes a homepage providing a virtual desktop infrastructure, VDI, service.

8. The display device of claim 7, wherein the first web page includes a menu for inputting login information,
the display device further includes a communication unit (110) configured to perform communication with an external server,
the processor is configured to execute the one or more instructions to, based on the login information, request user authentication from the external server, based on completion of user authentication in the external server, control the communication unit to receive virtual desktop information from the external server, and control the display to display the virtual desktop information.

9. A method of operating a display device (100), the method comprising:
based on execution of a predetermined application, displaying a first web page in a first window;
based on occurrence of a pop-up window event in the first web page, displaying a second web page in a second window;
adding history information of the first window including information about the first web page to history information of the second window, wherein the history information of the second window includes information about the first web page and information about the second web page; and
based on reception of an input for a web page movement request to a previous page while the second web page is displayed in the second window, displaying the first web page in the second window based on the history information of the second window.

10. The method of claim 9, further comprising, based on occurrence of a pop-up window event in the first window, removing the first window from a screen.

11. The method of claim 9, wherein the first window and the second window are displayed as a full screen.

12. The method of claim 9, further comprising, based on reception of a user input, displaying a web browser menu providing at least one web browser function in at least one of the first window and the second window.

13. A computer-readable recording medium storing a program which, when executed by a processor, cause the processor to perform the method of claim 9.

## Patentansprüche

1. Anzeigevorrichtung (100), umfassend:
eine Anzeige (140);
Speicher (130), der eine oder mehrere Anweisungen speichert; und
zumindest einen Prozessor (120), der konfiguriert ist, um die eine oder mehreren Anweisungen auszuführen, um basierend auf der Ausführung einer vorbestimmten Anwendung die Anzeige (140) zu steuern, um eine erste Webseite in einem ersten Fenster anzuzeigen,
basierend auf dem Auftreten eines Popup-Fensterereignisses in der ersten Webseite die Anzeige (140) zu steuern, um eine zweite Webseite in einem zweiten Fenster anzuzeigen, und Verlaufsinformationen des ersten Fensters, die Informationen über die erste Webseite einschließen, zu Verlaufsinformationen des zweiten Fensters hinzuzufügen, wobei die Verlaufsinformationen des zweiten Fensters Informationen über die erste Webseite und Informationen über die zweite Webseite einschließen, und
basierend auf einem Empfang einer Eingabe für eine Webseitenbewegungsanforderung an eine vorherige Seite, während die zweite Webseite in dem zweiten Fenster angezeigt wird, die Anzeige zu steuern, um die erste Webseite in dem zweiten Fenster basierend auf den Verlaufsinformationen des zweiten Fensters anzuzeigen.

2. Anzeigevorrichtung nach Anspruch 1, wobei der zumindest eine Prozessor konfiguriert ist, um die eine oder mehreren Anweisungen auszuführen, um basierend auf dem Auftreten eines Popup-Fensterereignisses in dem ersten Fenster das erste Fenster von einem Bildschirm zu entfernen.

3. Anzeigevorrichtung nach Anspruch 1, wobei der zumindest eine Prozessor konfiguriert ist, um die eine oder mehreren Anweisungen zum Steuern der Anzeige auszuführen, um das erste Fenster und das zweite Fenster als ein Vollbild anzuzeigen.

4. Anzeigevorrichtung nach Anspruch 1, wobei der zumindest eine Prozessor konfiguriert ist, um die eine oder mehreren Anweisungen auszuführen, um basierend auf dem Empfang einer Benutzereingabe die Anzeige zu steuern, um ein Webbrowsermenü anzuzeigen, das zumindest eine Webbrowserfunktion in zumindest einem von dem ersten Fenster und dem zweiten Fenster bereitstellt.

5. Anzeigevorrichtung nach Anspruch 4, wobei der zumindest eine Prozessor konfiguriert ist, um die eine oder mehreren Anweisungen auszuführen, um basierend darauf, dass die Benutzereingabe für einen voreingestellten Zeitraum nicht empfangen wird, die Anzeige zu steuern, um das Webbrowsermenü auszublenden und zu verhindern, dass das Webbrowsermenü angezeigt wird.

6. Anzeigevorrichtung nach Anspruch 1, ferner umfassend eine Kommunikationseinheit (110), die konfiguriert ist, um eine Kommunikation mit einer externen Steuerungsvorrichtung (200) durchzuführen, die die Anzeigevorrichtung steuert, wobei die Eingabe für die Webseitenbewegungsanforderung eine Eingabe einer spezifischen Taste einschließt, die in der externen Steuerungsvorrichtung bereitgestellt ist.

7. Anzeigevorrichtung nach Anspruch 1, wobei die erste Webseite eine Startseite einschließt, die einen virtuellen Desktop-Infrastruktur-, VDI-, Dienst bereitstellt.

8. Anzeigevorrichtung nach Anspruch 7, wobei die erste Webseite ein Menü zum Eingeben von Anmeldeinformationen einschließt,
wobei die Anzeigevorrichtung ferner eine Kommunikationseinheit (110) einschließt, die konfiguriert ist, um eine Kommunikation mit einem externen Server durchzuführen,
wobei der Prozessor konfiguriert ist, um die eine oder mehreren Anweisungen auszuführen, um basierend auf den Anmeldeinformationen eine Benutzerauthentifizierung von dem externen Server anzufordern, basierend auf dem Abschluss der Benutzerauthentifizierung in dem externen Server, die Kommunikationseinheit zu steuern, um virtuelle Desktopinformationen von dem externen Server zu empfangen, und die Anzeige zu steuern, um die virtuellen Desktopinformationen anzuzeigen.

9. Verfahren zum Betrieb einer Anzeigevorrichtung (100), das Verfahren umfassend:
basierend auf der Ausführung einer vorbestimmten Anwendung, Anzeigen einer ersten Webseite in einem ersten Fenster;
basierend auf dem Auftreten eines Popup-Fensterereignisses auf der ersten Webseite, Anzeigen einer zweiten Webseite in einem zweiten Fenster;
Hinzufügen von Verlaufsinformationen des ersten Fensters, die Informationen über die erste Webseite einschließen, zu Verlaufsinformationen des zweiten Fensters, wobei die Verlaufsinformationen des zweiten Fensters Informationen über die erste Webseite und Informationen über die zweite Webseite einschließen; und
basierend auf einem Empfang einer Eingabe für eine Webseitenbewegungsanforderung an eine vorherige Seite, während die zweite Webseite in dem zweiten Fenster angezeigt wird, Anzeigen der ersten Webseite in dem zweiten Fenster basierend auf den Verlaufsinformationen des zweiten Fensters.

10. Verfahren nach Anspruch 9, ferner umfassend, basierend auf dem Auftreten eines Popup-Fensterereignisses in dem ersten Fenster, Entfernen des ersten Fensters von einem Bildschirm.

11. Verfahren nach Anspruch 9, wobei das erste Fenster und das zweite Fenster als ein Vollbild angezeigt werden.

12. Verfahren nach Anspruch 9, ferner umfassend, basierend auf dem Empfang einer Benutzereingabe, Anzeigen eines Webbrowsermenüs, das zumindest eine Webbrowserfunktion bereitstellt, in zumindest einem von dem ersten Fenster und dem zweiten Fenster.

13. Computerlesbares Aufzeichnungsmedium, das ein Programm speichert, welches, wenn durch einen Prozessor ausgeführt, bewirkt, dass der Prozessor das Verfahren nach Anspruch 9 durchführt.

## Revendications

1. Dispositif d'affichage (100), comprenant :
un affichage (140) ;
de la mémoire (130) stockant une ou plusieurs instructions ; et
au moins un processeur (120) configuré pour exécuter les une ou plusieurs instructions pour, sur la base de l'exécution d'une application prédéterminée, commander à l'affichage (140) d'afficher une première page Web dans une première fenêtre, sur la base de l'occurrence d'un événement de fenêtre contextuelle dans la première page Web, commander à l'affichage (140) d'afficher une seconde page Web dans une seconde fenêtre, et ajouter des informations d'historique de la première fenêtre comprenant des informations sur la première page Web à des informations d'historique de la seconde fenêtre, dans lequel les informations d'historique de la seconde fenêtre comprennent des informations sur la première page Web et des informations sur la seconde page Web, et
sur la base de la réception d'une saisie pour une demande de mouvement de page Web vers une page précédente pendant que la seconde page Web est affichée dans la seconde fenêtre, commander à l'affichage d'afficher la première page Web dans la seconde fenêtre sur la base des informations d'historique de la seconde fenêtre.

2. Dispositif d'affichage de la revendication 1, dans lequel l'au moins un processeur est configuré pour exécuter les une ou plusieurs instructions pour, sur la base d'une occurrence d'un événement de fenêtre contextuelle dans la première fenêtre, supprimer la première fenêtre d'un écran.

3. Dispositif d'affichage de la revendication 1, dans lequel l'au moins un processeur est configuré pour exécuter les une ou plusieurs instructions pour commander à l'affichage d'afficher la première fenêtre et la seconde fenêtre en plein écran.

4. Dispositif d'affichage de la revendication 1, dans lequel l'au moins un processeur est configuré pour exécuter les une ou plusieurs instructions pour, sur la base d'une réception d'une saisie utilisateur, commander à l'affichage d'afficher un menu de navigateur Web fournissant au moins une fonction de navigateur Web dans au moins l'une de la première fenêtre et de la seconde fenêtre.

5. Dispositif d'affichage de la revendication 4, dans lequel l'au moins un processeur est configuré pour exécuter les une ou plusieurs instructions pour, sur la base du fait que la saisie utilisateur n'est pas reçue pendant une période temporelle prédéfinie, commander à l'affichage de masquer le menu de navigateur Web et d'empêcher l'affichage du menu de navigateur Web.

6. Dispositif d'affichage de la revendication 1, comprenant en outre une unité de communication (110) configurée pour réaliser une communication avec un dispositif de commande externe (200) commandant le dispositif d'affichage, dans lequel la saisie pour la demande de déplacement de page Web comprend une saisie d'une touche spécifique fournie dans le dispositif de commande externe.

7. Dispositif d'affichage de la revendication 1, dans lequel la première page Web comprend une page d'accueil fournissant un service d'infrastructure de bureau virtuel, VDI.

8. Dispositif d'affichage de la revendication 7, dans lequel la première page Web comprend un menu destiné à saisir des informations de connexion,
le dispositif d'affichage comprend en outre une unité de communication (110) configurée pour réaliser une communication avec un serveur externe,
le processeur est configuré pour exécuter les une ou plusieurs instructions pour, sur la base des informations de connexion, demander une authentification d'utilisateur à partir du serveur externe, sur la base de l'achèvement de l'authentification d'utilisateur dans le serveur externe, commander à l'unité de communication de recevoir des informations de bureau virtuel à partir du serveur externe, et commander à l'affichage d'afficher les informations de bureau virtuel.

9. Procédé de fonctionnement d'un dispositif d'affichage (100), le procédé comprenant :
sur la base de l'exécution d'une application prédéterminée, l'affichage d'une première page Web dans une première fenêtre ;
sur la base d'une occurrence d'un événement de fenêtre contextuelle dans la première page Web, l'affichage d'une seconde page Web dans une seconde fenêtre ;
l'ajout d'informations d'historique de la première fenêtre comprenant des informations sur la première page Web à des informations d'historique de la seconde fenêtre, dans lequel les informations d'historique de la seconde fenêtre comprennent des informations sur la première page Web et des informations sur la seconde page Web ; et
sur la base d'une réception d'une saisie pour une demande de mouvement de page Web vers une page précédente pendant que la seconde page Web est affichée dans la seconde fenêtre, l'affichage de la première page Web dans la seconde fenêtre sur la base des informations d'historique de la seconde fenêtre.

10. Procédé de la revendication 9, comprenant en outre, sur la base d'une occurrence d'un événement de fenêtre contextuelle dans la première fenêtre, la suppression de la première fenêtre d'un écran.

11. Procédé de la revendication 9, dans lequel la première fenêtre et la seconde fenêtre sont affichées en plein écran.

12. Procédé de la revendication 9, comprenant en outre, sur la base d'une réception d'une saisie utilisateur, l'affichage d'un menu de navigateur Web fournissant au moins une fonction de navigateur Web dans au moins l'une de la première fenêtre et de la seconde fenêtre.

13. Support d'enregistrement lisible par ordinateur stockant un programme qui, lorsqu'il est exécuté par un processeur, amène le processeur à réaliser le procédé de la revendication 9.
